# EUROPEAN PATENT APPLICATION

(11) **EP 1 586 241 A1**
(43) Date of publication of application: **19.10.2005**
(21) Application number: 04076164.5
(22) Date of filing: 16.04.2004
(51) Int. Cl.: A23L 1/00, A23L 1/03, A23K 1/00, A23K 1/165, C11D 3/386, C12N 9/98

(54) **Improved coating for stabilizing active ingredients**

(71) Applicant: Paramelt B.V., 1704 RJ Heerhugowaard (NL)
(72) Inventor: Van Rijsbergen, Johannes Marinus, 3602 XN Maarssen (NL); Felix, Hendrikus Fransiscus, 2022 CN Haarlem (NL); Capendale, John, 1721 DJ Broek op Langedijk (NL)
(74) Representative: van Westenbrugge, Andries

(57) **Abstract**

The present invention in a first aspect relates to coated particles containing an active ingredient, comprising a coating that, based on the total weight of said coating, comprises:
(1)60 - 95 wt% of a wax;
(2) 3 - 25 wt% of a fatty acid;
(3) 0 - 20 wt% of one or more additives; and
(4) an amount of alkali metal ions, which amount is sufficient to neutralize at least 70 % of the total amount of free carboxyl groups of the fatty acid.
It was found that applying said coating to the particles provides particular advantageous characteristics with regard to the process and storage stability of the particles.

The present invention also relates to aqueous coating dispersions comprising the aforementioned ingredients. It was found that said dispersions advantageously can comprise relatively high solid contents compared to coating dispersions presently known in the art.

## Description

### Field of the Invention

The present invention relates to the field of particles containing active ingredients and more in particular to the field of improving the stability thereof by applying one or more coating layers.

### Background of the Invention

Active ingredients, such as medicaments, pesticides, preservatives, vitamins, enzymes, hormones, flavouring agents, etc. that have low stability under ambient conditions or some degree of reactivity towards other components, are used in a wide variety of applications. These materials may deteriorate under the influence of various factors, such as the influence of temperature, atmospheric oxygen, and moisture to which the materials are subjected, or may react with other (active) components. These active ingredients therefore often cannot be processed into satisfactorily stable preparations or additives. Even in dry preparations, such as tablets, dragees, capsules, granulates or powders, there is generally considerable deterioration of the active substance content during manufacture processes and/or during storage.

Deterioration of the active substance is a particularly serious problem in preparations that contain relatively small amounts of the active ingredient or which are to be applied in controlable or relatively low doses.

It is known in the art to incorporate active ingredients into dry solid particles or granules and thereby protect them from inactivation and/or protect the environment form the active ingredient. For example in the field of enzymes, preparations in a granular form are well-known, with an eye towards achieving one or more desirable storage and/or performance characteristics, depending on the particular application at hand.

In the detergent industry, for example, enzyme additives, such as proteolytic enzymes, for use in powder detergents are usually prepared in the form of dust-free granulates, which can be produced in several different ways, e.g. using an extruder or drum granulator. Whereas enzyme granulates prepared according to known methods are entirely satisfactory for use in many commercial powder detergents, it is well recognized that enzyme stability of these granulates is reduced in certain formulations and under certain storage conditions. These include in particular detergents with high water content and/or high pH and/or high content of bleaching agents and particularly storage at high humidity and temperature.

In the animal feed industry, the addition of enzymes is well-known; examples include β-glucanase, xylanase and phytase which have beneficial effects on digestibility and on the utilization and uptake of certain components from the feed, is well-known. These enzymes (and other bioactive ingredients, such as therapeutically active compounds, oral vaccines, vitamins, etc.) are usually incorporated in the feed in the form of granulates. However, feed pellets are most often produced thereafter by methods involving steam and heating of the ingredients to temperatures as high as 80 °C. The enzymes and other (bio)active ingredients are not stable at this high temperature and thus a large surplus of it has to be used. Some bioactive ingredients are sensitive to hydrolysis or oxidation as well, and thus need further protection from the atmosphere of the environment, either during manufacture or during storage.

By applying a coating to the particles or granules containing active ingredients the stability of the active ingredient during manufacture and storage may be further improved. The use of a coating may perform any of a number of functions in the particle or granule, depending on the intended use, for example, a coating may achieve further protection of active(s) in the core particle against thermal degradation, moisture, oxidation by e.g. bleaching substances/systems (e.g. perborates, percarbonates, organic peracids and the like).

WO 89/08694 discloses a granulate detergent enzyme product comprising a core of an enzyme containing material with a coating comprising a mono- and/or diglyceride of a fatty acid, with a content of monoglycerides of at least 30 % by weight of the total mono- and diglyceride content. Due to this coating, the enzymatic stability in the presence of other detergent components, especially strong bleaching agents, is enhanced.

In WO 92/12645 an enzyme-containing granulate is described that is coated with a coating agent comprising a high melting fat or wax, which coated granulate is well suited for use in a fodder composition that is steam-treated and subsequently pelletized. The enzyme stability during pelletizing is improved due to the presence of the high melting wax or fat coating.

WO 98/55599 discloses phytase-containing granulates for incorporation in animal foodstuffs. It is mentioned in this document that a coating might be applied to the granulate in order to improve certain characteristics, such as protection of the enzyme from the environment. Said coating may comprise a fat, wax, polymer, unguent and/or ointment or a combination thereof.

These and other coating formulations can suitably be used to improve the manufacture and storage stability of granular or particulate compositions containing enzymes or other active ingredients to some extent. There is, however, still a need for further improvement of the stability.

Although what is said here before particularly relates to the field of enzyme formulations, evidently, the same is valid for other types of active ingredients. Thus, the invention is not restricted to enzymes only but incorporates all active ingredients as they are defined here after.

### Summary of the Invention

The present inventors have found that by applying a coating comprising, based on the total weight of the coating:
(1) 60 - 95 wt% of a wax;
(2) 3 - 25 wt% of a fatty acid;
(3) 0―20 wt% of one or more additives; and
(4) an amount of alkali metal ions, which amount is sufficient to neutralize at least 70 % of the total amount of free carboxyl groups of the fatty acid,
process and storage stability of particulate or granular compositions containing an active ingredient is significantly improved.

Contrary to what was to be expected, increasing the water sensitivity of the fatty acid was found to result in a better resistance of the coating to heat and steam.

It was furthermore found that the choice of the counterion that is used in these coatings has a significant impact on the stabilizing performance. In addition to providing improved performance, the use of an alkali metal ion according to the invention allows the coating dispersion to have a much higher solid content compared to coating dispersions presently known in the art of coating particles containing active ingredients, thus reducing the cost of operation due to less energy consumption and higher output.

The present invention therefore relates to particles containing an active ingredient, which particles are provided with a coating as described here above. Other aspects of the invention relate to aqueous dispersions of said coating formulations, to the use of such formulations and to processes of applying said coating to particles containing an active ingredient.

### Detailed Description of the Invention

Accordingly, in a first aspect the present invention relates to coated particles containing an active ingredient, having at least one coating layer that comprises:
(1) 60 - 95, preferably 70 - 90 wt% of a wax;
(2) 3 ― 25, preferably 5 - 20 wt% of a fatty acid;
(3) 0 ― 20, preferably 0-10 wt% of one or more additives; and
(4) an amount of alkali metal ions, which amount is sufficient to neutralize at least 70 %, preferably at least 90 % of the total amount of free carboxyl groups of the fatty acid,
based on the total weight of the coating.

The term "active ingredient", as used herein, refers to a wide variety of active compounds having a certain degree of instability towards heat, moisture, oxygen, or other (active) ingredients of the end appliaction. Non-limiting examples of such active ingredients include medicaments, vaccines, enzymes, hormones, oligonucleotides, vitamines, preservatives, flavourings and fragrances and pesticides.

In a particularly preferred embodiment the active ingredient is selected from the group of enzymes, more in particular including those that are frequently used in the detergent industry, mainly hydrolyzing enzymes such as proteases, amylases, lipases and cellulases, and the (animal) food industry, such as β-glucanase, xylanase and phytase.

The term "particle" as used herein refers to any type of solid, dry, particulate formulation known in the art comprising the active ingredient and typically at least a carrier material. Solid dry particulate formulations known in the art include for example powders, granulates, microcapsules, encapsulates, spray-dried particles, freeze-dried particles and extrudates. The particles to be coated may have any shape or size, however particles having a diameter in the range of 200 - 2000 µm are preferred.

The coating according to the present invention comprises a wax. Waxes which may be used include, but are not limited to waxes of vegetable, animal, synthetic, and/or mineral origin, or mixtures thereof, such as carnauba, candelilla, lanoline, cocoa butter, cottonseed stearin, Japan wax, Ouricury, rice-bran, bayberry, myrtle, mace, palm kernel, beeswax, spermaceti, Chinese insect, mutton tallow, waxes obtained by hydrogenation of coconut oils, soybean, the mineral waxes such as paraffin, ceresin, montan, or ozokerite, and synthetic (polyolefin) waxes such as polyethylene waxes and Fischer Tropsch waxes.

In a preferred embodiment an oxidized wax is used, which is typically produced by reacting the wax in oxygen or air at elevated temperatures. The oxidation of the wax forms, inter alia, carboxyl groups on the polymer chains of the starting wax, the number of which can be determined by means of the acid number (cf. D1386-98 "Standard Test Method for Acid Number (Empirical) of Synthetic and Natural Waxes", ASTM book of standards, vol. 15.04.). A high acid number of the wax is advantageous since the waxes can be dispersed and applied better. Such waxes can be dispersed or emulsified in water when heated above the melting point and neutralized. On cooling said dispersion to below the congealing point of the wax, the wax particles remain discrete. It is preferred that the acid number of the wax is between 15 and 25.

It is prefered that the wax is a high melting wax. Preferably the wax or oxidized wax according to the invention has a melting temperature between 100°C and 140°C. Any high-melting natural or synthetic wax may suitably be used in the present invention. However, the best results were obtained with a wax selected from the group of oxidized polyethylene waxes and mixtures thereof. In a most preferred embodiment an oxidized low density polyethylene wax (ox-LDPE) or high density polyethylene wax (ox-HDPE) is used.

The coating according to the present invention further comprises a fatty acid. Non-limiting examples thereof that may suitably be applied include unsaturated, poly-unsaturated, and partially hydrogenated fatty acids and mixtures thereof. It was found that the use of fatty acids having higher water sensitivity resulted in coatings providing increased stability during manufacure, storage and compounding, than the use of less water sensitive fatty acids. More in particular higher water sensitivity was found to result in improved resistance of the coating against heat and moisture. The higher the unsaturation of the carbon atom chain of the fatty acid, the better results (stability) are obtained. Therefore the fatty acid according to the present invention preferably one or more poly-unsaturated fatty acids, preferably having a carbon atom chain length of between C14 ― C20. The term "poly-unsaturated" as used herein refers to fatty acid carbon atom chains having multiple double bonds. In the art it is well-known to express the degree of unsaturation of fatty acids as the iodine value, which, according to the definition in AOCS method Cd 1-25 (26), IV, is expressed as the number of centigrams of iodine absorbed per gram of fatty acid. In a particularly preferred embodiment of the present invention the iodine value of the total fatty acid fraction of the coating formulation is between 40 and 150. In the present invention preferred fatty acids comprise tallow oleic acid, vegetable poly-unsaturated fatty acids, soya poly-unsaturated fatty acids, safflower poly-unsaturated fatty acid, and mixtures thereof.

According to the present invention the free carboxyl groups of the fatty acid are neutralized using an alkali metal hydroxide. By "neutralization of carboxyl groups" as used herein, is meant the conversion of said carboxyl group into a carboxylate using, according to the present invention, an alkali metal hydroxide, which herein is also referred to as "saponification".

Accordingly the coating comprises 3-25 wt% of fatty acids, a substantial amount thereof comprising carboxylate groups associated with an alkali metal ion. Preferably at least 70 % of the carboxyl groups, even more preferably at least 90 % of the carboxyl groups is saponified. Thus the present coating typically at least comprises 0.15 wt% of the alkali metal ion. In preferred embodiment the alkali metal is selected from sodium and potassium, even more preferably the alkali metal is potassium.

During saponification of the fatty acid carboxyl groups an amount of the carboxyl groups of the wax, in the instance that an oxidized wax is used, may be neutralized as well, typically however to a lower degree than the fatty acid, e.g. 35 ― 80 % of the carboxyl groups of the wax may be saponified.

The coating layers of the present invention may further comprise one or more additional ingredients. These additional ingredients may be used to provide the coating with desirable charactristics with regard to, for example, colour, taste, odour, processing characteristics etc. Typical examples known in the art comprise binders, plasticisers, pigments, lubricants, fillers, flavours, antioxidant, defoamers, etc. Suitable pigments for example include finely divided whiteners such as titanium dioxide or calcium carbonate, or coloured pigments or a combination thereof. As used herein 'lubricant' refers to any agent which reduces surface friction, lubricates the surface of the granule, decreases static electricity or reduces friability of the granules. Lubricants can also play a role in improving the coating process, by reducing the tackiness of binders in the coating; thus lubricants can serve as anti-agglomeration agents and wetting agents.

These additional ingredients may be used in any suitable amount in the coating layer. However, in a preferred embodiment the present coating comprises at least 80 wt%, preferably at least 90 wt%, most preferably at least 95 wt%, based on the total weight of the coating layer, of the principal components, i.e. of the wax and the alkali metal salt of a fatty acid.

The protective effect of the coating depends on the thickness of the coating and the amount of coating relative to the particle containing an active ingredient. An increased coating thickness provides a better protection of the active ingredient, but at the same time results in increased manufacturing costs as well as a risk of poorer particle properties with respect to the solubility rate of the active ingredient upon introduction of the particle in an aqueous medium. For effective protection, the coating thickness also must be adjusted to the size of the core, e. g. to obtain a desired size of the finished particle. Depending on the size of the core material, the coating may be applied in 1-75 wt% based on the weight of the coated granule to obtain a desired size of the coated granule.

The coating should encapsulate the enzyme containing core by forming a substantially continuous layer. The layer or coating is preferably homogenous in thickness. By substantially continuous is meant that the core surface should have few or no uncoated areas.

The coated particles containing an active ingredient according to the invention may comprise one or more additional coating layers. For example, such additional coating layers may comprise one or more intermediate coating layers and/or one or more outer coating layers. These additional coating layers may serve any of a number of functions in a particle composition, such as the provision of additional stabilization, controlled release characteristics, colour, taste, etc. to the particles.

The present invention in another aspect relates to aqueous dispersions comprising the coating formulation, which can conveniently be used to apply the coating formulation to particles containing an active ingredient using conventional coating techniques. It was also found that the coating formulation according to the present invention provides the particular advantage that aqueous dispersions thereof can be made at a higher solid level than the currently available systems. This reduces the amount of water to be evaporated during the coating process resulting in significant saving in energy and in an increase in manufacturing capacity compared to the currently available systems.

Therefore there is provided an aqueous coating dispersion comprising, based on the dry weight of the coating ingredients, 60 ― 95, preferably 70 - 90 wt% of a wax; 3 ― 25, preferably 5 - 20 wt% of a fatty acid ; 0 ― 20, preferably 0-10 wt% of one or more additives; and an amount of alkali metal ions, which amount is sufficient to neutralize at least 70 %, preferably at least 90 % of the fatty acid carboxyl groups; as described here above.

The total solid content of the aqueous dispersion may suitably vary between 25 and 37 % depending on the desired processing characteristics. However in a particularly preferred embodiment the aqueous dispersion has a total solid content of at least 30%, more preferably at least 33.5 %, based on the total weight of the dispersion.

The alkali metal ions are preferably added to the coating formulation in the form of an aqueous solution of the hydroxide, in an amount sufficient to neutralize at least 70 %, preferably at least 90 % of the fatty acid carboxyl groups. In another embodiment it is preferred that an amount of the alkali metal hydroxide is added that is sufficient to obtain a degree of neutralization of 50 ― 100 %, based on the total amount of free carboxyl groups from the wax and the fatty acid. Typically the alkali metal hydroxide is added to the dispersion in an amount of at least 0.25 wt%, preferably at least 0.5 wt%, based on the dry weight of the coating ingredients. Preferably said amount does not exceed 5 wt%, more preferably it does not exceed 4 wt%, based on the dry weight of the coating ingredients.

The dispersion as described above can be manufactured using conventional processes known to the skilled professional. However, in a preferred embodiment the dispersion is produced by adding a wax, a fatty acid and alkali metal hydroxide solution, in amounts as described here above, to at least a part of the total water volume and subsequently agitating the mixture at an increased temperature, preferably under reduced pressure, for 40 - 60 minutes. Preferably the temperature during agitating is between 120- 130 °C.

The dispersion as described above can be used to coat particles containing an active ingredient. This may suitably be done using any conventional coating technique known in the art. Suitable techniqueses include fluidized bed coating and drum coating.

Another aspect of the present invention relates to a process of coating an active containing particle comprising the step of applying to said particle an aqueous dispersion as described here above, while evaporating the water.

### Example 1

A dispersion was made by combining 255 g water; 370 g of a HDPE wax with a melting point of 111°C and an acid value of 17; 79 g tallow oleic acid and 28 g of a 50 % potassium hydroxyde solution. This is heated up to 120°C and stirred for 30 minutes. At this stage 735 g of water heated up to 130°C and added under pressure to the premix, stirred for 15 minutes and cooled down to room temperature. The light yellow dispersion had total solids of 31.2; a pH of 8; with a viscosity (Brookfield sp 2 at 23°C) of 68 and a particle size of 80 nm.
This dispersion was tested and compared to a standard production dispersion and found to give a significant improvement on enzyme stability

## Claims

1. Aqueous coating dispersion comprising, based on the dry weight thereof :
(1) 60 ― 95, preferably 70 ― 90 wt% of a wax;
(2) 3 ― 25, preferably 5-20 wt% of a fatty acid;
(3) 0 ― 20, preferably 0-10 wt% of one or more additives; and
(4) an amount of alkali metal ions, which amount is sufficient to neutralise at least 70 %, preferably at least 90 % of the total amount of free carboxyl groups of the fatty acid.

2. Aqueous coating dispersion according to claim 1, wherein the fatty acid comprises unsaturated, poly-unsaturated, and partially hydrogenated fatty acids, and mixtures thereof, having an average chain length of C 14-C22, and wherein the iodine value of the total fatty acid fraction is between 40-150.

3. Aqueous coating dispersion according to claim 1 or 2, wherein the wax is selected from the group of oxidised polyethylene waxes.

4. Aqueous coating dispersion according to any one of claims 1-3 wherein the alkali metal is selected from the group of sodium and potassium

5. Aqueous coating dispersion according to any one of claims 1-4, wherein the dispersion has a solid content of at least 30 %, based on the total weight of the dispersion.

6. Coated particle containing an active ingredient, comprising a coating that comprises, based on the total weight of said coating:
(1) 60 ― 95, preferably 70 ― 90 wt% of a wax;
(2) 3 ― 25, preferably 5 ― 20 wt% of a fatty acid;
(3) 0 ― 20, preferably 0-10 wt% of one or more additives; and
(4) an amount of alkali metal ions, which amount is sufficient to neutralize at least 70 %, preferably at least 90 % of the total amount of free carboxyl groups of the fatty acid.

7. Coated particle containing an active ingredient according to claim 6, wherein the active ingredient comprises an enzyme.

8. Processs of preparing an aqueous coating dispersion comprising dispersing in water 60-95 wt% of a wax, 3-25 wt% of a fatty acid and 0.25-5 wt% of an alkali metal hydroxide, based on the total dry weight of the components.

9. Process of coating particle containing an active ingredient comprising the step of applying an aqueous dispersion according to any one of claims 1 to 5 and 8.
